# FASCICULE DE BREVET EUROPEEN

(11) **EP 0 610 148 B1**
(45) Date de publication et mention de la délivrance du brevet: **17.07.1996**
(21) Numéro de dépôt: 94460001.4
(22) Date de dépôt: 26.01.1994
(51) Int. Cl.: B23K 11/25, G01K 7/08

(54) **Mesure de la température lors d'une opération de soudage ou de sertissage**
Temperaturmessung beim Schweissen oder Pressen
Temperature measurement during welding or crimping

(30) Priorité: 01.02.1993 FR 9301371
(43) Date de publication de la demande: 10.08.1994
(73) Titulaire: Leon, Paul, F-27630 Berthenonville (FR)
(72) Inventeur: Leon, Paul, F-27630 Berthenonville (FR)
(74) Mandataire: Le Guen, Louis François

(56) Documents cités:
- US-A- 3 309 494

## Description

La présente invention concerne un procédé de mesure de la température de l'espace d'une ou plusieurs pièces qui est soumis à une élévation de température lors d'une opération de soudage ou de sertissage. Dans une opération de soudage, il permet notamment de déterminer une température qui est en relation avec la température du noyau de soudage. Dans une opération de sertissage, il permet de déterminer la température de l'interface qui se trouve entre l'électrode de sertissage et la pièce à sertir.

L'invention concerne également des procédés de contrôle d'au moins un paramètre de soudage et d'au moins un paramètre de sertissage respectivement d'une opération de soudage et d'une opération de sertissage qui utilisent le procédé de mesure de température de l'invention.

On connaît déjà de tels procédés et on pourra se reporter utilement au document de brevet WO-A-93/04812, publié le 18 mars 1993 (état de la technique selon l'Art. 54(3) CBE) et déposé par le présent demandeur le 25 août 1992.

Le procédé de mesure de la température décrit dans ce document de brevet consiste à utiliser comme signal de mesure de la température le signal thermoélectrique engendré à l'une au moins des interfaces situées entre les pièces ou situées entre une électrode et la pièce avec laquelle cette électrode est en contact.

Dans une opération de sertissage, le signal de mesure est directement relié à la température de l'interface où a lieu le sertissage. Dans une opération de soudage, compte tenu de la proximité des interfaces susceptibles d'engendrer des signaux thermoélectriques et le noyau de soudage, le signal de mesure ainsi obtenu est représentatif de la température du noyau de soudage et ce avec une grande précision et sans aucun effet de retard.

En conséquence, aussi bien dans des opérations de soudage que dans des opérations de sertissage, on utilise un tel signal de mesure de température, engendré par le pouvoir thermoélectrique des interfaces, pour contrôler au moins un des paramètres de soudage ou de sertissage, notamment les courants de soudage ou de sertissage. Pour ce faire et selon des procédés qui sont maintenant connus, on compare d'abord la valeur du signal de mesure de température à une valeur prédéterminée, puis on agit sur la grandeur du ou des paramètres de l'opération en fonction de la comparaison ainsi effectuée. La valeur prédéterminée correspond à la valeur d'un signal de mesure obtenu, pour un même instant t et dans des mêmes conditions, notamment de nature et de dimensions des pièces, lors d'une opération préalable de soudage ou de sertissage, laquelle s'est avérée bonne d'un point de vue mécanique et métallurgique.

Le procédé précédemment décrit peut néanmoins ne pas donner entière satisfaction, notamment lorsqu'au moins une interface entre une électrode et une des pièces à souder est soit une interface ponctuelle, c'est-à-dire dont la surface est relativement faible au regard de la dimension de la base des électrodes, soit une somme d'interfaces ponctuelles. En effet, de faibles volumes délimités par ces interfaces et traversés par le courant de soudage ou de sertissage ont leur température qui peut croître rapidement et atteindre, en début d'opération de soudage ou de sertissage, des valeurs anormalement élevées à comparer à la température du noyau de soudage ou de la partie chaude de la pièce à sertir. Il en résulte un signal thermoélectrique dont la tension est beaucoup plus élevée que la tension du signal qui devrait être engendré compte tenu de la température réelle du noyau de soudage ou de la température de la pièce à sertir.

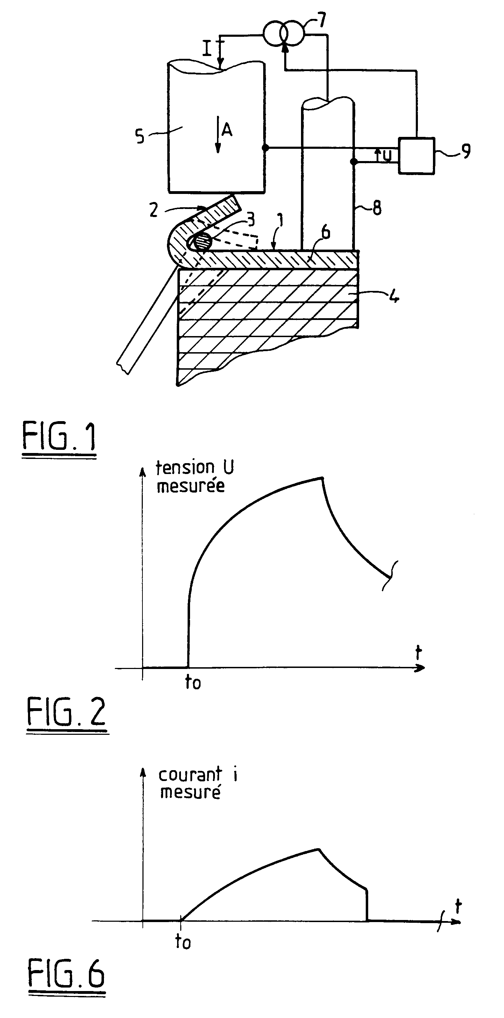

Pour illustrer ce problème général, on l'explicite dans le cas d'un sertissage à chaud d'un segment de collecteur de moteur électrique. On se reportera à la Fig. 1 dans laquelle on voit un segment de collecteur 1 dont l'extrémité 2 est recourbée pour venir enserrer un fil électrique 3, ceci afin d'établir la connexion d'une bobine d'un rotor du moteur à un collecteur de ce rotor. Le segment 1 est monté sur un cylindre 4 dans un matériau électriquement isolant.

Une électrode 5 est prévue pour exercer sur l'extrémité 2 du segment 1 une force en direction de la partie 6 du segment 1 (flèche A) qui repose sur le cylindre isolant 4 afin de pouvoir la recourber contre la partie 6. Une source de courant 7 est reliée à l'électrode 5 ainsi qu'à une seconde électrode 8 en contact électrique avec la partie 6 du segment 1. Elle délivre un courant de sertissage entre l'extrémité 2 et la partie 6. Une unité centrale 9 comporte un voltmètre interne (non représenté) destiné à mesurer la tension thermoélectrique développée à l'interface entre l'électrode 5 et l'extrémité 2. A chaque instant t, l'unité 9 compare la valeur de la tension mesurée à une valeur prédéterminée, par exemple stockée dans une mémoire interne de l'unité 9. Elle comporte une sortie reliée à une entrée de commande de la source de courant 7 pour commander l'intensité du courant qu'elle délivre en fonction de la comparaison effectuée à l'instant t.

La température qu'il conviendrait de mesurer notamment aux fins de la régulation du courant de sertissage délivré par la source 7 est la température du volume de l'extrémité 2 du segment 1.

Au commencement de l'opération de sertissage, la surface de l'interface entre l'extrémité 2 du segment 1 et l'électrode 5 est relativement faible comparée à la surface de la base de l'électrode 5. L'extrémité 2 du segment 1 peut même présenter des bavures qui, en détériorant l'état de surface de l'interface extrémité 2- électrode 5, diminue encore sa surface. Le faible volume de l'extrémité 2 du segment 1 qui se trouve alors en contact avec l'électrode 5 est par ailleurs parcouru par le courant de sertissage. Il en résulte une élévation rapide de la température de ce volume, beaucoup plus rapide que celle de l'extrémité 2 dans son ensemble. La tension thermoélectrique mesurée entre l'électrode 5 et l'extrémité 2 n'est alors pas représentative de la température de l'extrémité 2. Ceci est particulièrement vrai au début de l'opération de sertissage.

La régulation du courant délivré par la source 7 est donc perturbée par un procédé de mesure tel qu'il vient d'être décrit.

On a représenté, à la Fig. 2, un graphe montrant l'évolution en fonction du temps, à partir du temps t₀ de début d'un processus de sertissage, de la tension thermoélectrique U mesurée aux bornes des électrodes 5 et 8. Comme on peut le constater la montée à partir du temps t₀ est extrêmement rapide et ne correspond pas à une élévation normale de la température dans l'extrémité 2 du segment 1 à sertir.

Le même phénomène peut avoir lieu lors d'une opération de soudage par points lorsque les interfaces entre les électrodes et les pièces à souder sont dans un état tel qu'elles peuvent être considérées comme des sommes d'interfaces ponctuelles, dans le sens donné ci-dessus. Le faible volume délimité par chaque interface ponctuelle, étant parcouru par le courant de soudage, est alors le siège d'une élévation de température anormalement élevée. Il en résulte comme précédemment un signal de mesure de température qui est erroné et qui ne peut pas être mis en relation avec la température du noyau de soudage. Il s'ensuit que la régulation du courant de soudage est mal assurée par cette mesure de la température.

De manière tout à fait générale, on a compris que le problème qui se pose provient du fait que les signaux thermoélectriques engendrés aux interfaces entre les pièces à souder ou à sertir et les électrodes sont en réalité représentatifs de la température de petits volumes de pièces qui sont délimités par ces interfaces ponctuelles et qui, étant parcourus par le courant de soudage ou de sertissage, ont leurs températures qui s'élèvent plus rapidement et plus aléatoirement que la température de l'espace de soudage ou de sertissage. Il en résulte des mesures de température qui sont erronées et, par conséquent, de mauvaises régulations de courant de soudage ou de sertissage.

Le but de l'invention est donc de proposer un procédé de mesure de la température tel qu'il vient d'être décrit mais par lequel on ne mesure pas la température des petits volumes très chauds aux interfaces entre électrodes et pièces, et entre pièces elles-mêmes.

Ce but est atteint grâce à un procédé selon la revendication 1.

Selon une autre caractéristique de l'invention, ladite résistance a ses bornes qui sont respectivement reliées, d'une part, à une électrode ou à l'une desdites pièces et, d'autre part, à l'autre électrode ou à une autre pièce.

Des moyens doivent être prévus pour que lesdites sources engendrent un signal thermoélectrique. Il peut consister à prévoir au moins l'une des électrodes dans un alliage présentant avec le métal de la pièce avec laquelle elle est en contact ou avec l'alliage de l'autre électrode, un effet thermoélectrique significatif, c'est-à-dire mesurable.

Selon le procédé de l'invention, la ou les sources thermoélectriques débitent dans la résistance. Or, il est apparu que le courant de mesure qui traverse la résistance dépende du volume de cette source, si bien que l'influence de toute source ponctuelle est faible si non négligeable. Il en résulte que le procédé de l'invention permet de donner une valeur représentative de la température de l'ensemble de l'espace qui est ou qui a été soumis à l'élévation de température lors du passage du courant de soudage ou de sertissage.

La mesure de température selon le procédé de l'invention peut s'effectuer en cours d'opération de soudage ou de sertissage. Mais, elle peut également s'effectuer, après une opération de soudage ou de sertissage.

On notera que le procédé de l'invention pourrait également s'appliquer aux cas d'opérations de soudage ou de sertissage dans lesquelles l'élévation de température n'est pas assurée par le passage d'un courant, mais par apport d'énergie thermique.

L'invention propose également un procédé de contrôle de paramètres d'opérations de soudage selon la revendication 3 et un procédé de contrôle de paramètres d'opérations de sertissage selon la revendication 4 qui sont respectivement des applications de ce procédé de mesure à de telles opérations.

Ces applications, ainsi que le procédé de mesure décrit ci-dessus, sont décrits ci-après en relation avec les dessins joints parmi lesquels:
la Fig. 1 est un schéma synoptique d'une installation de sertissage de segments de collecteur de moteur électrique selon l'art antérieur,
la Fig. 2 est un graphe montrant l'évolution dans le temps de la tension thermoélectrique dans le cas d'un sertissage d'un segment de moteur électrique effectué avec une installation selon la Fig. 1,
la Fig. 3 est un schéma synoptique d'une machine de soudage qui fonctionne selon un procédé de contrôle de l'invention,
la Fig. 4 est un graphe montrant le courant de mesure dans la résistance en fonction du temps,
la Fig. 5 est un schéma synoptique d'une installation de sertissage de segments de collecteur de moteur électrique qui fonctionne selon un procédé de contrôle selon l'invention, et
la Fig. 6 est un graphe montrant l'évolution dans le temps du courant qui traverse une résistance selon l'invention dans le cas d'un sertissage effectué avec une installation selon la Fig. 4.

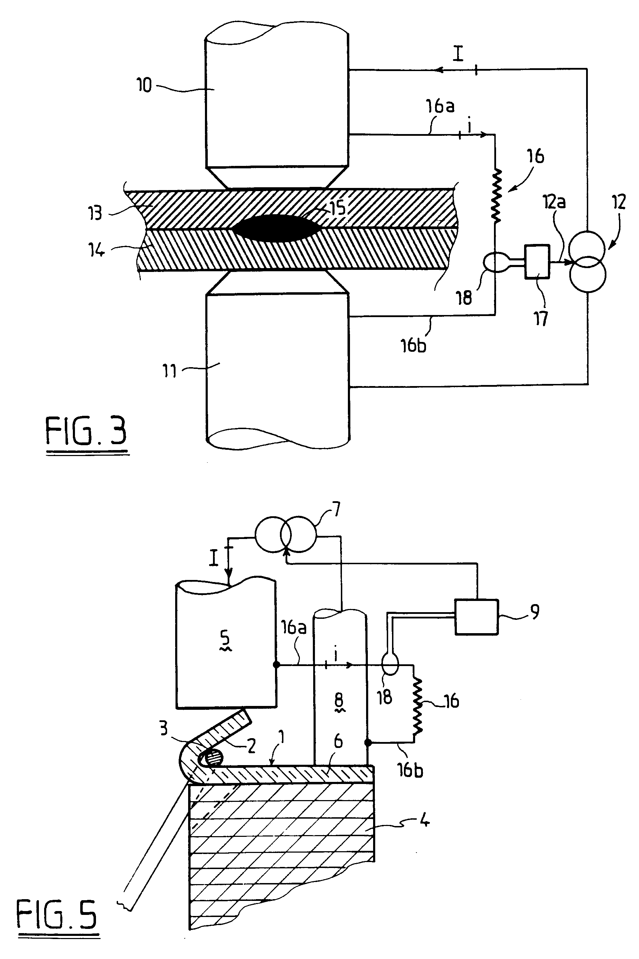

La machine de soudage représentée à la Fig. 3 comprend essentiellement deux électrodes 10 et 11 respectivement reliées à une source de courant 12. Les deux électrodes 10 et 11 sont en contact avec deux pièces 13 et 14 et permettent le passage du courant I délivré par la source 12 dans l'espace compris dans l'épaisseur des deux pièces 13 et 14 entre les électrodes 10 et 11. Il résulte du passage de ce courant I dans les pièces à souder 13 et 14 une élévation de température dans l'espace considéré, et ce jusqu'à la fusion d'un noyau 15 qui, une fois refroidi, constituera un point de soudure entre les deux pièces 13 et 14.

Une résistance 16 a ses bornes 16a et 16b qui sont respectivement reliées aux électrodes 10 et 11. Une unité centrale 17 comporte, d'une part, une entrée qui est reliée à un dispositif de mesure de courant 18 pour la mesure du courant qui circule dans la résistance 16 et, d'autre part, une sortie qui est reliée à une entrée de commande 12a de la source de courant 12.

La résistance 16 a une valeur de l'ordre de quelques milliohms. On a pu mesurer, lors d'opérations de soudage, des courants de mesure i de l'ordre de quelques ampères, typiquement 3 ampères.

Le dispositif de mesure 18 a été représenté comme étant une boucle de courant. On comprendra qu'il pourrait également s'agir de tout autre dispositif de mesure de courant, comme un dispositif à effet Hall.

La mesure du courant i dans la résistance 16 peut également consister à mesurer la tension à ses bornes 16a et 16b et à en déduire, par application de la loi d'Ohm, le courant. Cette mesure de tension n'est pas comparable à celle qui est effectuée selon les procédés de l'art antérieur. En effet, la mesure selon l'invention est effectuée aux bornes de la résistance 16 qui forme un shunt de la source de courant thermoélectrique. Par contre, selon l'art antérieur, il n'y a pas de résistance de shunt.

On notera que la résistance 16 pourrait avoir ses bornes 16a et 16b respectivement reliées, d'une part, à une électrode 10 ou à l'une desdites pièces 13 ou 14 et, d'autre part, à l'autre électrode 11 ou à une autre pièce, soit 14 ou 13, sans pour autant sortir du cadre de l'invention, bien que cela puisse, par ailleurs, poser des problèmes de connexion.

Le fonctionnement de l'unité centrale 17 se fait selon une succession de cycles à deux phases.

Dans la première phase, l'unité 17 agit sur la source de courant 12 de manière à ce que celle-ci délivre le courant de soudage I dans les pièces à souder 13 et 14. Dans le premier cycle, l'intensité du courant de soudage est prédéterminée. Dans les cycles suivants, elle correspond à celle qui a été déterminée dans la seconde phase du cycle précédent.

Dans la seconde phase de chaque cycle, l'unité 17 mesure l'intensité du courant de mesure i qui traverse la résistance 16 et la compare à une valeur prédéterminée qui est, par exemple, stockée dans une mémoire interne de l'unité 17 pour le même instant t du processus de soudage. L'ensemble des valeurs qui sont stockées dans cette mémoire pour tous les instants t d'un processus de soudage est celui qui a, par exemple, été préalablement obtenu, dans les mêmes conditions notamment d'épaisseur et de nature des pièces 13 et 14, en soudant deux pièces 13 et 14 de référence dont il s'est avéré que leur soudure était bonne mécaniquement et métallurgiquement parlant. Durant cette seconde phase de chaque cycle, la source de courant 12 est inactive.

L'unité 17, en fonction du résultat de cette comparaison, détermine alors une valeur de consigne pour l'intensité du courant de soudage I qui sera appliqué à la première phase du cycle suivant.

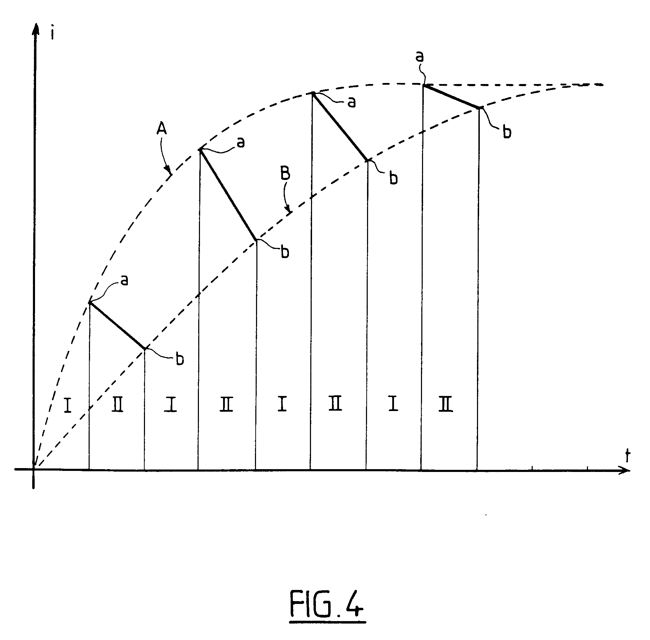

A la Fig. 4, on a représenté un graphe qui montre l'intensité du courant i en fonction du temps. On a noté I, les phases d'application du courant de soudage I, et II, les phases de mesure du courant i. On constate que pendant les phases II, l'intensité du courant de mesure i décroît. Cette décroissance correspond au refroidissement pendant les phases II de l'espace des pièces à souder 13 et 14 compris entre les deux électrodes 10 et 11.

Selon que l'on mesure l'intensité du courant i au début (points a) ou à la fin des phases II (points b), on obtient comme courbe i (t), soit celle qui est référencée A à la Fig. 4, soit celle qui est référencée B.

Avantageusement, pour déterminer le courant de soudage I durant une phase I qui suit une phase II, on utilise la mesure de l'intensité du courant i à la fin de cette phase II (points b).

A partir de la détermination des pentes des droites qui joignent les points a aux points b, il est apparu possible d'avoir une estimation de la grosseur du volume qui a subi une élévation de température durant la phase I d'application du courant de soudage.

On notera que pendant la première phase de chaque cycle, la source de courant 12 débite dans les pièces 13 et 14 mais également dans la résistance 16, du fait que celle-ci est électriquement en parallèle avec les deux pièces 13 et 14. On a ainsi pu mesurer durant cette phase des courants de quelques centaines d'ampères dans la résistance 16. Aussi, des moyens permettant une dissipation de l'énergie thermique dégagée alors par la résistance 16 doivent être prévus.

Les matériaux qui composent les électrodes 10 et 11 sont prévus pour qu'au moins une interface entre les électrodes 10 et 11 et les pièces à souder 13 et 14 soit la source d'un courant thermoélectrique significatif, c'est-à-dire un courant dont l'intensité est sensiblement proportionnelle à la température atteinte par cette interface et d'amplitude mesurable.

L'installation de sertissage représentée à la Fig. 5 comporte sensiblement les mêmes éléments que celle qui est représentée à la Fig. 1. Ces mêmes éléments portent par conséquent les mêmes références.

Une résistance 16 a ses bornes 16a et 16b qui sont respectivement reliées aux deux électrodes 5 et 8.

Comme dans la machine représentée à la Fig. 3, l'installation de la Fig. 5 comporte une unité centrale 9 dont une entrée est reliée au dispositif de mesure 18 de l'intensité du courant i qui circule dans la résistance 16. Une sortie de l'unité 9 est reliée à une entrée de commande de la source de courant 7.

A l'instar de celui de l'unité 17 de la machine selon la Fig. 3, le fonctionnement de l'unité centrale 9 se fait également en cycles à deux phases, une phase de mesure de la température et une phase d'application du courant de sertissage.

On notera que, aussi bien dans la machine selon la Fig. 3 que dans l'installation selon la Fig. 5, la ou les sources thermoélectriques présentes à au moins l'une des interfaces entre les électrodes 5 et 8 ou 10 et 11 et les pièces à souder 13 et 14 ou la pièce à sertir 1 débitent dans la résistance 16, laquelle est de faible valeur. Le résultat de la mesure de courant ainsi effectuée tient compte de la résistance interne de cette ou de ces sources thermoélectriques, résistance interne qui est apparue comme étant une fonction directe du volume qui est la source du courant de mesure.

Le graphe de la Fig. 6 montre l'évolution dans le temps de l'intensité du courant de mesure i qui traverse la résistance 16 d'une installation selon la Fig. 5. On constate que, contrairement à ce qui est montré à la Fig. 2, la montée du courant de mesure est progressive. Le courant de mesure est donc en relation avec la montée de température dans la pièce à sertir.

## Revendications

1. Procédé de mesure de la température de l'espace d'une ou plusieurs pièces (1; 13, 14) qui est soumis à une élévation de température lors d'une opération de soudage ou de sertissage, consistant à utiliser les sources thermoélectriques formées à au moins l'une des interfaces situées entre au moins une électrode (5; 10, 11) et lesdites pièces (1; 13, 14) et entre lesdites pièces, ladite ou lesdites électrodes (5; 10, 11) se trouvant en contact avec ledit espace, à faire débiter lesdites sources thermoélectriques dans une résistance électrique (16), à mesurer le courant qui traverse ladite résistance (16) et à en déduire un signal de température.

2. Procédé de mesure selon la revendication 1, caractérisé en ce que ladite résistance (16) a ses bornes (16a et 16b) qui sont respectivement reliées, d'une part, à une électrode (5; 10, 11) ou à l'une desdites pièces (1; 13, 14) et, d'autre part, à l'autre électrode (11, 10) ou à une autre pièce (1; 14, 13).

3. Procédé de contrôle de la grandeur d'au moins un paramètre de soudage d'une opération de soudage par points, opération consistant à soumettre une pluralité de pièces (13, 14) au passage d'un courant de soudage entre deux électrodes (10, 11) afin d'élever la température de l'espace compris entre lesdites deux électrodes (10, 11) et de permettre le soudage desdites pièces (13, 14), consistant en outre à :
- a) mesurer l'intensité du courant qui traverse une résistance (16) dont les bornes (16a et 16b) sont respectivement reliées, d'une part, à une électrode (10) ou à l'une desdites pièces (13 ou 14) et, d'autre part, à l'autre électrode (11) ou à une autre pièce (14 ou 13), ledit courant étant engendré thermoélectriquement à au moins l'une des interfaces entre les électrodes (10, 11) et lesdites pièces (13, 14) et/ou entre les pièces (13, 14),
- b) comparer la valeur de l'intensité de courant mesuré à une valeur prédéterminée, et
- c) agir sur la grandeur du ou desdits paramètres de soudage en fonction du résultat de ladite comparaison.

4. Procédé de contrôle de la grandeur d'au moins un paramètre de soudage d'une opération de sertissage à chaud, opération consistant à soumettre, au moyen d'une électrode (5), l'extrémité (2) d'une pièce (1) à une force de sertissage contre une autre partie (6) de ladite même pièce (1) tout en faisant passer un courant dans l'espace compris entre ladite extrémité (2) et ladite autre partie ((6) afin d'en élever la température et de permettre le sertissage de ladite extrémité (2) sur ladite partie (6), consistant en outre à :
- a) mesurer l'intensité du courant qui traverse une résistance (16) dont les bornes (16a et 16b) sont respectivement reliées à une électrode (5) et à la partie (6) de ladite pièce (1), ledit courant étant engendré thermoélectriquement à l'interface entre l'électrode (5) et l'extrémité (2) de ladite pièce (1),
- b) comparer la valeur de l'intensité de courant mesuré à une valeur prédéterminée, et
- c) agir sur la grandeur du ou desdits paramètres de sertissage en fonction du résultat de ladite comparaison.

## Claims

1. Process for measuring the temperature of the space of one or several parts (1; 13; 14) which undergoes a rise in temperature during a welding or crimping operation, consisting in utilizing the thermoelectric sources formed at at least one of the interfaces located between at least one electrode (5; 10, 11) and the said parts (1; 13, 14) and between the said parts, the said electrode or electrodes (5; 10, 11) which are in contact with the said space, in feeding the said thermoelectric sources into an electric resistance (16), in measuring the current which passes through the said resistance (16) and in deducing from this a temperature signal.

2. Measurement process according to Claim 1, characterized in that the said resistance (16) has terminals (16a and 16b) which are connected, respectively, to one electrode (5; 10, 11) or to one of the said parts (1; 13, 14) and to the other electrode (11, 10) or to another part (1; 14, 13).

3. Process for controlling the magnitude of at least one welding parameter of a spot-welding operation, the operation consisting in subjecting several parts (13, 14) to the passage of a welding current between two electrodes (10, 11) for the purpose of raising the temperature of the space contained between the said two electrodes (10, 11) and enabling the said parts (13, 14) to be welded, and furthermore consisting in:
- a) measuring the intensity of the current passing through a resistance (16) whose terminals (16a and 16b) are connected, respectively, to an electrode (10) or to one of the said parts (13 or 14) and to the other electrode (11) or to another part (14 or 13), the said current being generated thermoelectrically at at least one of the interfaces between the electrodes (10, 11) and the said parts (13, 14) and/or between the parts (13, 14),
- b) comparing the value of the measured current intensity with a predetermined value, and
- c) adjusting the magnitude of the said welding parameter or parameters as a function of the result of the said comparison.

4. Process for controlling the magnitude of at least one welding parameter of a hot-crimping operation, the operation consisting in subjecting the end (2) of a part (1) to a crimping force against another portion (6) of the said same part (1) by means of an electrode (5) while passing a current into the space contained between the said end (2) and the said other portion (6) for the purpose of raising its temperature and enabling the said end (2) to be crimped on to the said portion (6), and furthermore consisting in:
- a) measuring the intensity of the current passing through a resistance (16) whose terminals (16a and 16b) are connected, respectively, to an electrode (5) and to the portion (6) of the said part (1), the said current being generated thermoelectrically at the interface between the electrode (5) and the end (2) of the said part (1),
- b) comparing the value of the measured current intensity with a predetermined value, and
- c) adjusting the magnitude of the said crimping parameter or parameters as a function of the result of the said comparison.

## Patentansprüche

1. Verfahren zur Messung der Temperatur des Bereichs eines oder mehrerer Werkstücke (1; 13, 14), der bei einem Arbeitsgang des Schweißens oder Pressens eine Temperaturerhöhung erfährt, welches darin besteht, daß man die thermoelektrischen Quellen nutzt, die an mindestens einer der Grenzflächen zwischen mindestens einer Elektrode (5; 10, 11) und den Werkstücken (1; 13, 14) und zwischen den Werkstücken gebildet werden, wobei sich die Elektrode(n) (5; 10, 11) mit dem genannten Bereich in Kontakt befindet/befinden, daß man diese thermoelektrischen Quellen in einen elektrischen Widerstand (16) liefern läßt, den durch diesen Widerstand (16) fließenden Strom mißt und daraus ein Temperatursignal ableitet.

2. Meßverfahren nach Anspruch 1, dadurch gekennzeichnet, daß der Widerstand (16) mit seinen Klemmen (16a und 16b) jeweils einerseits mit einer Elektrode (5; 10, 11) oder mit einem der Werkstücke (1; 13, 14) und andererseits mit der anderen Elektrode (11, 10) oder mit einem anderen Werkstück (1; 14, 13) verbunden ist.

3. Verfahren zur Kontrolle der Größe mindestens eines Schweißparameters eines Arbeitsgangs des Punktschweißens, wobei dieser Arbeitsgang darin besteht, daß man eine Mehrzahl von Werkstücken (13, 14) dem Fluß eines Schweißstromes zwischen zwei Elektroden (10, 11) aussetzt, um die Temperatur des Bereichs zwischen diesen zwei Elektroden (10, 11) zu erhöhen und das Verschweißen dieser Werkstücke (13, 14) zu gestatten, und außerdem darin besteht, daß
- a) man die Stärke des Stromes mißt, der einen Widerstand (16) durchfließt, dessen Klemmen (16a und 16b) jeweils einerseits mit einer Elektrode (10) oder mit einem der Werkstücke (13 oder 14) und andererseits mit der anderen Elektrode (11) oder mit einem anderen Werkstück (14 oder 13) verbunden sind, wobei der Strom an mindestens einer der Grenzflächen zwischen den Elektroden (10, 11) und den Werkstücken (13, 14) und/oder zwischen den Werkstücken (13, 14) thermoelektrisch erzeugt wird,
- b) man den Wert der gemessenen Stromstärke mit einem vorgegebenen Wert vergleicht und
- c) man je nach dem Ergebnis dieses Vergleichs auf die Größe des oder der Schweißparameter einwirkt.

4. Verfahren zur Kontrolle der Größe mindestens eines Preßparameters eines Arbeitsgangs des Pressens, wobei dieser Arbeitsgang darin besteht, daß man das Ende (2) eines Werkstücks (1) mittels einer Elektrode (5) einer Preßkraft gegen einen anderen Teil (6) desselben Werkstücks (1) aussetzt, wobei man gleichzeitig einen Strom in den Bereich zwischen dem Ende (2) und dem anderen Teil (6) fließen läßt, um dessen Temperatur zu erhöhen und die Pressung des Endes (2) auf den Teil (6) zu gestatten, und außerdem darin besteht, daß
- a) man die Stärke des Stromes mißt, der einen Widerstand (16) durchfließt, dessen Klemmen (16a und 16b) jeweils mit einer Elektrode (5) und dem Teil (6) des Werkstücks (1) verbunden sind, wobei der Strom an der Grenzfläche zwischen der Elektrode (5) und dem Ende (2) des Werkstücks (1) thermoelektrisch erzeugt wird,
- b) man den Wert der gemessenen Stromstärke mit einem vorgegebenen Wert vergleicht und
- c) man je nach dem Ergebnis dieses Vergleichs auf die Größe des oder der Preßparameter einwirkt.
